# EUROPEAN PATENT SPECIFICATION

(11) **EP 2 394 769 B1**
(45) Date of publication and mention of the grant of the patent: **01.05.2013**
(21) Application number: 11168894.1
(22) Date of filing: 07.06.2011
(51) Int. Cl.: B23D 53/04, B23D 53/12

(54) **Band saw machine**
Bandsägemaschine
Machine à scie à ruban

(30) Priority: 11.06.2010 IT BO20100369
(43) Date of publication of application: 14.12.2011
(73) Proprietor: Femi S.p.A, 40024 Castel San Pietro Terme (Bologna) (IT)
(72) Inventor: Morelli, Massimo, 48018 Faenza (Ravenna) (IT)
(74) Representative: Firmati, Leonardo

(56) References cited:
- WO-A2-2009/128628
- US-A- 1 576 051

## Description

This invention relates to a band saw machine. The preamble of claim 1 is based on WO 2009/128628.

More specifically, this invention relates to a band saw machine of the type used for cutting metal. Band saw machines are known to be alternative to circular blade cutters which have the disadvantage of having an upper limit to cutting depth which depends on the radius of the blade itself.

Prior art band saws comprise a horizontal base to which a frame is hinged, by means of a suitable support, the frame being equipped with two pulleys: a drive pulley and an idle pulley.

Trained around these pulleys there is an endless saw band which is driven, through the drive pulley, by a motor mounted on the frame.

The base also mounts a vice for clamping the part to be cut.

At the front of the frame, facing the operator, there is a handgrip which allows the frame itself to be rotated relative to the support and lowered towards the base in such a way that the saw band engages the part to be cut.

The frame is also rotatable as one with its support so that the part can be cut at different angles - usually from 90° to 45° but even as far as 30° and further - with reference to the longitudinal direction of extension of the part itself, usually in bar form.

Band saw manufacturers are constantly on the lookout to improve the cutting capacity of their products without increasing the overall footprint of the machines.

By "cutting capacity" is meant the maximum dimensions of the parts (bars of quadrangular, round or similar shapes) which can be cut.

In other words, the manufacturers' concern is how to maximize cutting capacity without increasing the size of the machine.

In the pursuit of this aim, manufacturers have worked on several parameters but, at most, have achieved increases of just a few millimetres through optimization of vice shape or similar measures.

This invention therefore has for an object to increase the cutting capacity of band saw machines without increasing machine footprint.

Another object of the invention is to provide a band saw machine which has a good cutting capacity and which is at once simple and inexpensive to make and practical to use.

The technical features of the invention according to the above mentioned objects may be easily inferred from the contents of the appended claims, especially claim 1.

The advantages of the invention are more apparent from the detailed description which follows, with reference to the accompanying drawings which illustrate a preferred non-limiting example embodiment of the invention and in which:
- Figure 1 is a schematic perspective view from above of a band saw machine made according to this invention;
- Figures 2 to 4 illustrate the band saw machine of Figure 1 in three different configurations of use, in respective top plan views with some parts transparent in order to better illustrate others;
- Figure 5 illustrates the band saw machine of the preceding figures in a schematic top plan view with some parts transparent in order to better illustrate others;

- Figure 6 is a schematic perspective view from above, with some parts cut away for clarity, illustrating a portion of the band saw machine of the preceding figures;
- Figure 7 is a schematic top plan view showing a band saw machine according to the current state of the art and with the cutting unit in two different configurations of use.

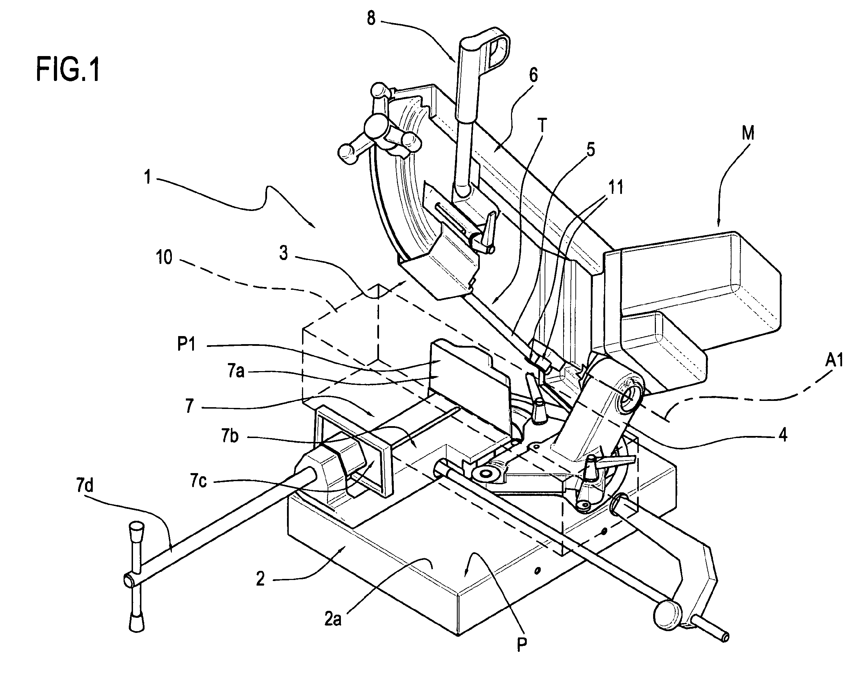

With reference to Figure 1 of the accompanying drawings, the reference numeral 1 denotes in its entirety a band saw machine made according to this invention.

The band saw machine 1 comprises a base 2 constructed in such a way that it can be securely positioned on the floor or on a work bench, and a cutting unit 3 connected to the base 2 by means of a mounting element 4.

The base 2 has a top face 2a that defines a plane P.

The mounting element 4 of the cutting unit 3 is movable relative to the base 2 in the plane P to move the cutting unit 3 in such a way as to cut a part 10 at different angles.

The cutting unit 3 comprises an endless toothed saw band 5 which is movable on a respective frame 6. The saw band 5 is trained in a loop around respective pulleys not shown in the drawings and has at least one cutting portion consisting of a set of teeth (not illustrated) whose cutting edge is inclined, as is customary, by a predetermined angle to the feed direction of the saw band 5 itself.

Of the aforementioned pulleys not illustrated, one is idle and the other is driven by a respective motor M, also mounted on the frame 6.

Mounted on the base 2 is a clamping element 7, for example a vice, for locking a part 10 to be cut, the latter being drawn with dashed lines in Figure 1.

The vice 7 has a fixed jaw 7a, mounted squarely relative to a bottom 7b integral with it, and a movable jaw 7c.

The bottom 7b defines a supporting surface for the part 10 to be cut.

With its locating wall for the part 10, the fixed jaw 7a defines a plane P1.

The movable jaw 7c is adapted to be moved, in known manner, towards the fixed jaw 7a by means of a threaded rod 7d, so that the part to be cut is clamped between the two jaws.

In alternative embodiments which are not illustrated, part 10 to be cut is supported directly by the base 2. That is to say there are no clamping elements like the vice 7.

In the case illustrated, where the vice 7 is present, the base 2 supports the part 10 indirectly.

The frame 6 of the cutting unit 3 is rotatably supported by the mounting element 4 in such a way as to rotate about a horizontal axis A1 and so that the cutting unit 3 can move between a first, lowered position where the rotating band 5 works on the part 10 to be cut, and a second, raised position (illustrated in Figure 1) where the band 5 is disengaged from the part 10 to be cut.

The machine 1 further comprises an actuating lever 8 connected to one end of the frame 3, the lever 8 being usable by an operator to move the cutting unit 3 between the above mentioned first and second positions. Mounted advantageously on the lever 8 is a pushbutton, not illustrated, for starting the machine 1.

The rotating band 5 is movable relative to the frame 3, in known manner, along a ring-shaped path having an active, preferably straight, cutting stretch T. At the active stretch T, the band 5 is adapted to come into contact with the part 10 to be cut when the user lowers the cutting unit 3 towards the base 2.

The aforementioned active stretch T starts in the proximity of a pair of band 5 guide rollers 11, each of the rollers coming into contact with a respective face of the band 5.

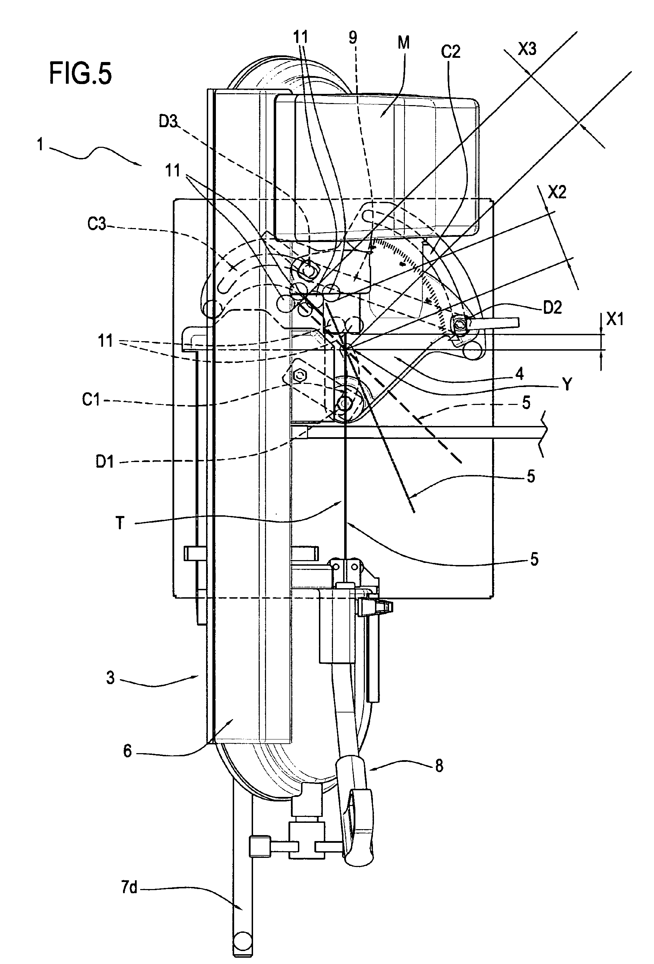

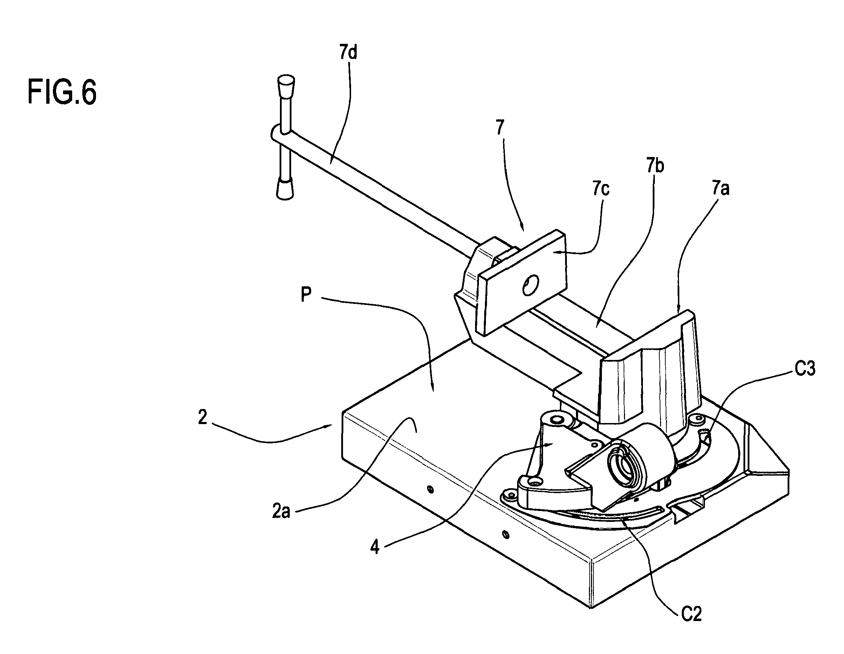

As illustrated in Figures 5 and 6, the base 2 has a plurality of cams C1, C2, C3 formed on it.

The mounting element 4 of the cutting unit 3 has a plurality of follower elements D1, D2, D3 adapted to engage the cams C1, C2, C3 to define respective cam and follower mechanisms.

Advantageously, the cams C1, C2, C3 are slotted cams adapted to apply positive control to the respective follower elements D1, D2, D3. Advantageously, to guarantee smoothness in the movement of the cutting unit relative to the base 2, better described below, the follower elements D2, D3 are operatively connected to each other, under the base 2, by a link bar 9.

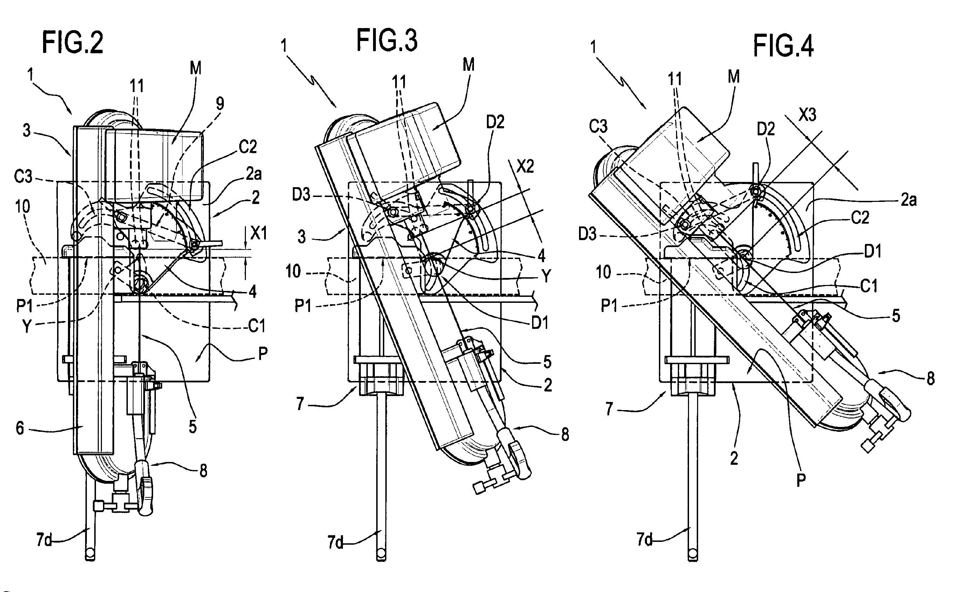

As illustrated in Figures 2 to 4, the cutting unit 3 is movable relative to the base 2 as one with the mounting element 4 according to a composite motion, the respective law of motion being applied by the assembly composed of the cutting unit 3 and the mounting element 4 with the specially shaped and mutually arranged cams C1, C2, C3. This composite motion, being different from plain rotation and substantially defining a roto-translation for the cutting unit 3, is designed to modify the cutting start point Y of the band 5 on the part 10 to be cut according to the desired cutting angle.

In other words, once a part 10 has been placed on the vice 7, the cutting unit 3 can be lowered until the band 5 comes into contact with the part 10 to identify on the stationary band 5 a point Y (being a virtual point fixed in space because, in use, the band 5 moves by virtue of its cutting motion) which is defined as the point at which the band starts cutting the part.

Still with reference to Figures 2 to 4, it may be observed that following the movement of the mounting element 4 and of the cutting unit 3 to make cuts at different angles, the point Y, while remaining fixed in space, changes its position relative to the active stretch T of the band 5, precisely because of the composite motion imparted to the assembly composed of the cutting unit 3 and the respective mounting element 4.

In effect, as Figures 2 to 4 also clearly illustrate, taking as reference the band 5 guide rollers 11, which are fixed relative to the frame 6 of the cutting unit, the distance between the cutting start point Y and the rollers 11 changes from a minimum value x1 (at the 90° cutting position) to a higher value x3 (at the 45° cutting position) according to the different angle of the cut made on the part 10.

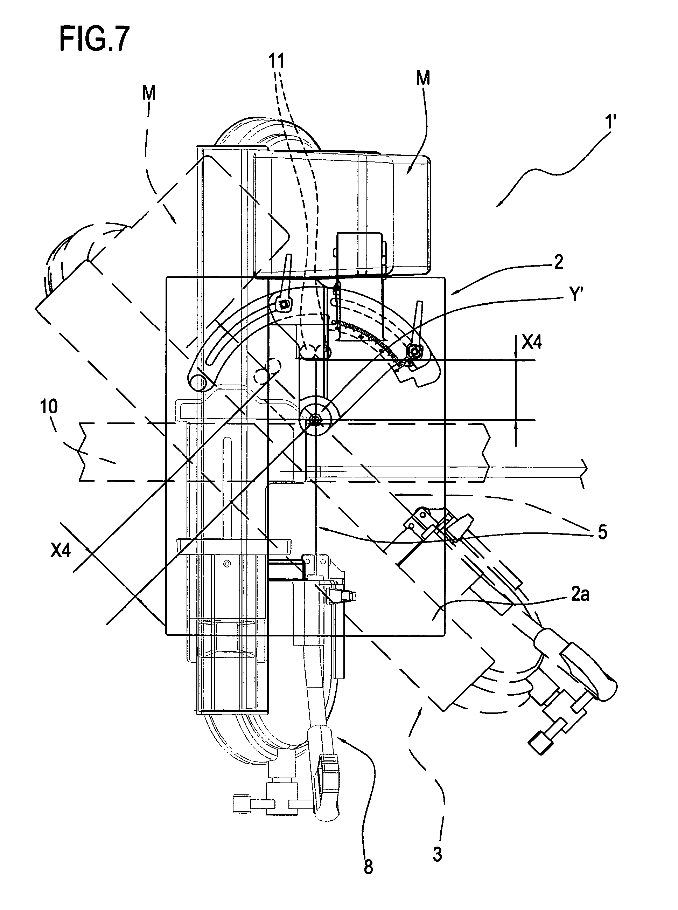

The advantages achieved by the machine of this invention are made even more evident by comparing it with the state of the art as exemplified by the band saw machine illustrated in Figure 7.

With reference to Figure 7, the reference numeral 1' denotes in its entirety a prior art band saw machine where the components corresponding to those of the machine 1 of the preceding figures are labelled with the same reference numerals. By way of an example, in the drawing of the prior art machine 1', the part 10 to be cut has a square cross section.

Figure 7 also illustrates the cutting unit 3 in two different configurations: the first (drawn with an unbroken line) suitable for cutting the part 10 at 90° and the second (drawn with a dashed line) suitable for cuts at an angle of 45°.

The two illustrations of the cutting unit 3, at 90° and at 45°, represent the same number of configurations in which the band 5 adopts its cutting start position, that is, the position defining a point Y' where the band 5 comes into contact with the part to be cut, depending on the shape and size of the part itself.

Irrespective of whether the part 10 is cut at 90° (band 5 drawn with unbroken line in Figure 7) or at 45° (band 5 drawn with dashed line in Figure 7), the cutting start point Y' does not vary because the movement of the cutting unit 3 consists of rotation only.

In other words, the rotation of the mounting element 4, and thus of the cutting unit 3, from the 90° to the 45° position, occurs about a vertical axis passing precisely through the point Y' and, more generally, lying in a plane containing the locating surface of the fixed jaw 7a of the vice 7. According to a different aspect, the distinctive feature of the machine according to the invention may be described as a method for moving the cutting unit 3 of the band saw machine 1 between two positions of it: a first position where the saw band 5 is adapted to make right-angle cuts on the part 10 and a second position where the band 5 is adapted to make inclined cuts on the part 10. During the movement of the cutting unit 3 and of the mounting element 4 as one therewith between these two positions, the band 5, assumed for simplicity to be stationary (that is, not driven by the respective motor M) intersects at a plurality of points on it, a single straight line perpendicular to a supporting surface 7b of the part 10 to be cut and lying in a plane P1 defined by a fixed locating wall for the selfsame part 10. In other words, with reference to Figures 2 to 4, the fixed straight line is simply a straight line perpendicular to the plane P of the base 2 and passing through the cutting start point Y of the band 5 on the part to be cut.

The method described above thus makes it possible to roto-translate the band 5 relative to the straight line through the cutting start point Y. The method is implemented by roto-translating the cutting unit 3 relative to the base 2, the roto-translation being accomplished by means of the cam and follower mechanisms described above. Advantageously, the invention achieves the above mentioned aims.

Thanks to a composite motion of substantially roto-translational type it is possible to enhance the cutting capacity of the band saw machine without increasing the dimensions and footprint of the machine and of its components.

In effect, modifying the position of the cutting start point Y of the band 5 on the part 10 has made it possible to greatly increase the active, working stretch T of the band itself.

In the prior art machines, the overall dimensions of the fixed jaw 7a of the vice in practice made it impossible to use a large, potentially operative stretch of the saw band, labelled x4 in Figure 7. In effect, the distance x4 between the cutting start point Y' and the guide rollers 11 necessarily had to be left free behind the jaw 7a so that the latter could be approached for 45° cuts so as to keep the cutting start point Y' on the part at the same position.

With the band saw machine according to the invention, this limitation has been easily overcome by introducing the roto-translational motion of the mounting element 4 of the cutting unit 3, thanks to which the "useless" or unused stretch of the band, that is to say, the stretch corresponding to the distance x4, has in practice been eliminated, by making this stretch operative to all intents and purposes, at least in 90° cuts, where it has been possible to increase the maximum cutting size by 30% and more.

In conclusion, whereas with prior art band saw machines with rotating cutting unit, the "useless" stretch of the band, extending for a distance x4, was present in all cutting configurations, from 90° to 45°, the composite motion of this invention allows the same useless stretch to be made variable from a maximum distance of x3 for a 45° cut, to a minimum distance x1 for a 90° cut, which is, moreover the statistically most frequent type of cut.

In other words, advantageously, according to the invention, it is possible to obtain much greater capacities compared to prior art machines of the same size and footprint, at least at the 90° cutting position.

Purely by way of an example, a prior art band saw machine with a normal rotatable support was able to cut rectangles of a maximum of 150 mm. By simply converting the support into a roto-translating support, the machine's cutting capacity can be increased to 200 mm and over.

In this description, the term "composite motion" has been used to mean any motion that is not plan circular motion or plain straight-line motion.

The method for moving the cutting unit of a band saw machine described in this specification is an optimum embodiment .

Possible less effective embodiments of the machine according to the invention might involve composite motions whereby the band does not slide in a straight line, so as to move the cutting start point on the part according to the angular cutting position and thereby making the operator's task more difficult because it means taking different measuring points on the part according to the angle of the cut to be made. These less effective embodiments, however, also fall within the scope of protection afforded by this invention.

The invention described above is susceptible of industrial application and may be modified and adapted in many ways without thereby departing from the scope of the inventive concept.

## Claims

1. A band saw machine, in particular for cutting metal, comprising
- a base (2) adapted to also support, directly or indirectly, a part (10) to be cut,
- a cutting unit (3) comprising a toothed saw band (5) and motor means (M) for driving the band (5) to cut the part (10),
- an element (4) for mounting the cutting unit (3), the mounting element (4) being supported by the base (2) and being movable relative to it in a plane (P) defined by a top face of the base (2) itself, to move the cutting unit (3) in such a way as to make cuts at different angles, the cutting unit (3) being movable relative to the base (2) as one with the mounting element (4) according to a composite motion different from plain rotation and designed to modify the cutting start point (Y) of the band (5) on the part to be cut according to the desired cutting angle; **characterized in that** the composite motion is defined by at least one cam and follower mechanism, said mechanism comprising at least one cam (C1, C2, C3) and at least one follower (D1, D2, D3), one of the two being integral with the base (2) and the other of the two being integral with the cutting unit (3).

2. The band saw machine according to claim 1, **characterized in that** the composite motion comprises a roto-translation.

3. The band saw machine according to claim 1 or 2, **characterized in that** the cam (C1, C2, C3) is made on the base (2) and the follower (D1, D2, D3) is mounted on the cutting unit (3).

4. The band saw machine according to any of the foregoing claims, **characterized in that** it comprises a plurality of cams (C1, C2, C3) and respective followers (D1, D2, D3).

5. The band saw machine according to any of the claims from 1 to 4, where the cutting unit (3) comprises a pair of rollers (11) for guiding the saw band (5), **characterized in that** the distance between the cutting start point (Y) of the band on the part to be cut changes from a minimum value (x1) at a 90° cutting position of the cutting unit (3) to a higher value (x3) at a 45° cutting position.

6. The band saw machine according to any of the claims from 1 to 5, **characterized in that** it comprises a vice (7) for locking a part (10) to be cut and mounted on the base (2).

## Patentansprüche

1. Bandsägemaschine, insbesondere zum Schneiden von Metall, umfassend
- eine Basis (2), die dazu geeignet ist, außerdem direkt oder indirekt ein zu schneidendes Teil (10) zu tragen,
- eine Schneideeinheit (3), umfassend ein gezahntes Sägeband (5) und Motormittel (M) zum Antrieb des Bands (5) zum Schneiden des Teils (10),
- ein Element (4) zum Befestigen der Schneideeinheit (3), wobei das Befestigungselement (4) von der Basis (2) getragen wird und relativ zu ihr in einer Ebene (P) beweglich ist, die von einer Oberfläche der Basis (2) definiert wird, um die Schneideeinheit (3) so zu bewegen, dass Schnitte in verschiedenen Winkeln ausgeführt werden, wobei die Schneideeinheit (3) relativ zur Basis (2) einstückig mit dem Befestigungselement (4) gemäß einer zusammengesetzten Bewegung beweglich ist, die sich von einer einfachen Drehung unterscheidet und dazu konzipiert ist, den Schneidestartpunkt (Y) des Bands (5) auf dem zu schneidenden Teil gemäß dem gewünschten Schneidewinkel zu ändern; **dadurch gekennzeichnet, dass** die zusammengesetzte Bewegung durch mindestens einen Nocken- und Folgermechanismus definiert wird, wobei der Mechanismus mindestens einen Nocken (C1, C2, C3) und mindestens einen Folger (D1, D2, D3) umfasst, wobei einer der beiden einstückig mit der Basis (2) verbunden ist und der andere der beiden einstückig mit der Schneideeinheit (3) verbunden ist.

2. Bandsägemaschine nach Anspruch 1, **dadurch gekennzeichnet, dass** die zusammengesetzte Bewegung eine Roto-Translation umfasst.

3. Bandsägemaschine nach Anspruch 1 oder 2, **dadurch gekennzeichnet, dass** der Nocken (C1, C2, C3) auf der Basis (2) ausgebildet ist und der Folger (D1, D2, D3) auf der Schneideeinheit (3) befestigt ist.

4. Bandsägemaschine nach einem der vorangehenden Ansprüche, **dadurch gekennzeichnet, dass** sie eine Vielzahl von Nocken (C1, C2, C3) und entsprechenden Folgern (D1, D2, D3) umfasst.

5. Bandsägemaschine nach einem der Ansprüche 1 bis 4, wobei die Schneideeinheit (3) ein Paar Rollen (11) zum Führen des Sägebands (5) umfasst, **dadurch gekennzeichnet, dass** sich der Abstand zwischen dem Schneidestartpunkt (Y) des Bands am zu schneidenden Teil von einem Mindestwert (x1) bei einer 90°-Schneideposition der Schneideeinheit (3) zu einem höheren Wert (x3) bei einer 45°-Position ändert.

6. Bandsägemaschine nach einem der Ansprüche 1 bis 5, **dadurch gekennzeichnet, dass** sie einen Schraubstock (7) zum Arretieren eines zu schneidenden Teils (10) umfasst, das auf der Basis (2) befestigt ist.

## Revendications

1. Machine à scie à ruban, notamment pour découper le métal, comprenant
- une base (2) pouvant aussi soutenir, directement ou indirectement, une pièce (10) à découper,
- une unité de découpe (3) comprenant un ruban de scie dentelé (5) et des moyens moteurs (M) pour amener le ruban (5) à découper la pièce (10),
- un élément (4) pour monter l'unité de découpe (3), l'élément de montage (4) étant soutenu par la base (2) et mobile par rapport à elle dans un plan (P) déterminé par une face supérieure de ladite base (2), pour déplacer l'unité de découpe (3) de sorte à faire des découpes à différents angles, l'unité de découpe (3) étant mobile par rapport à la base (2) de façon solidaire de l'élément de montage (4) selon un mouvement composé différent de la simple rotation et apte à modifier le point de départ de la découpe (Y) du ruban (5) sur la pièce à découper selon l'angle de découpe voulu ; **caractérisée en ce que** le mouvement composé est déterminé par au moins une came et par un mécanisme poussoir, ledit mécanisme comprenant au moins une came (C1, C2, C3) et au moins un poussoir (D1, D2, D3), l'un des deux étant solidaire de la base (2) et l'autre des deux étant solidaire de l'unité de découpe (3).

2. Machine à scie à ruban selon la revendication 1, **caractérisée en ce que** le mouvement composé comprend une rototranslation.

3. Machine à scie à ruban selon les revendications 1 ou 2, **caractérisée en ce que** la came (C1, C2, C3) est réalisée sur la base et le poussoir (D1, D2, D3) est monté sur l'unité de découpe (3).

4. Machine à scie à ruban selon l'une quelconque des revendications précédentes, **caractérisée en ce qu'**elle comprend une pluralité de cames (C1, C2, C3) et des poussoirs respectifs (D1, D2, D3).

5. Machine à scie à ruban selon l'une quelconque des revendications 1 à 4, dans laquelle l'unité de découpe (3) comprend une paire de rouleaux (11) pour guider le ruban de scie (5), **caractérisée en ce que** la distance entre le point de départ de la découpe (Y) du ruban sur la pièce à découper passe d'une valeur minimale (x1) correspondant à une position de découpe à 90° de l'unité de découpe (3) à une valeur supérieure (x3) correspondant à une position de découpe à 45°.

6. Machine à scie à ruban selon l'une quelconque des revendications 1 à 5, **caractérisée en ce qu'**elle comprend un étau (7) pour bloquer une pièce (10) à découper et monté sur la base (2).
